# EUROPÄISCHE PATENTANMELDUNG

(11) **EP 1 004 974 A2**
(43) Veröffentlichungstag der Anmeldung: **31.05.2000**
(21) Anmeldenummer: 99122826.3
(22) Anmeldetag: 17.11.1999
(51) Int. Cl.: G06K 7/10

(54) **Lesestift**

(30) Priorität: 23.11.1998 DE 29820891 U
(71) Anmelder: SATRONIC AG, 8157 Dielsdorf (CH)
(72) Erfinder: Mauz, Peter, 79793 Wutöschingen-Horhei (DE)
(74) Vertreter: Herzbach, Dieter, Dipl.-Ing.

(57) **Zusammenfassung**

Die Erfindung betrifft einen Lesestift.

Die erfindungsgemäße Lesestift verfügt über eine im Lesestift integrierte Auswerteeinrichtung sowie über eine im Lesestift integrierte Anzeigeeinrichtung. Die Auswerteeinrichtung dient dem Auswerten der vom Lesestift erfaßten Daten. Die Anzeigeeinrichtung dient dem Anzeigen der erfaßten und ausgewerteten Daten. Der erfindungsgemäße Lesestift benötigt keine externen Auswerteeinrichtungen oder Anzeigeeinrichtungen.

## Beschreibung

Die Erfindung betrifft einen Lesestift gemäß dem Oberbegriff des Anspruchs 1.

Lesestifte der obigen Art sind aus dem Stand der Technik hinlänglich bekannt. So zeigen die EP-A-0 588 005 und die US-A-4,423,319 derartige Lesestifte. Die dort gezeigten Lesestifte dienen dem Erfassen von Daten, wobei die von den bekannten Lesestiften erfaßten Daten an eine externe Auswerteeinheit übertragen werden. So werden bei der EP-A-0 588 005 und der US-A-4,423,319 die von den jeweiligen Lesestiften erfaßten Daten an einen Datenterminal übertragen, der mit dem jeweiligen Lesestift über ein Kabel verbunden ist. Im Datenterminal werden die Daten ausgewertet.

Die obigen Lesestifte verfügen allesamt über den Nachteil, daß sie lediglich zum Erfassen von Daten geeignet sind. Die zur Auswertung und Anzeige der Daten benötigten externen Einrichtungen beschränken die Einsatzmöglichkeiten der bekannten Lesestifte, da -wie bereits erwähnt- separate Einrichtungen mitgeführt werden müssen.

Hiervon ausgehend liegt der vorliegenden Erfindung das Problem zu Grunde, einen Lesestift zu schaffen, der die obigen Nachteile vermeidet.

Dieses Problem wird durch einen Lesestift mit den Merkmalen des Anspruchs 1 gelöst.

Weitere vorteilhafte Ausgestaltungen der Erfindung ergeben sich aus den Unteransprüchen und der Beschreibung. Nachfolgend wird ein bevorzugtes Ausführungsbeispiel der Erfindung anhand der Zeichnung näher erläutert. In der Zeichnung zeigt:
- Fig. 1: einen erfindungsgemäßen Lesestift in Verbindung mit einem Feuerungsautomat in schematisierter Darstellung; und
- Fig. 2: ein schematisiertes Blockschaltbild für den erfindungsgemäßen Lesestift.

Der in der Zeichnung dargestellte erfindungsgemäße Lesestift dient dem Erfassen von Daten einer Steuerungseinrichtung für Ölbrenner oder Gasbrenner, insbesondere eines Feuerungsautomaten, sowie dem Auswerten und Anzeigen dieser Daten. Beim Lesestift handelt es sich um eine kleine, mobile Einheit im Westentaschenformat.

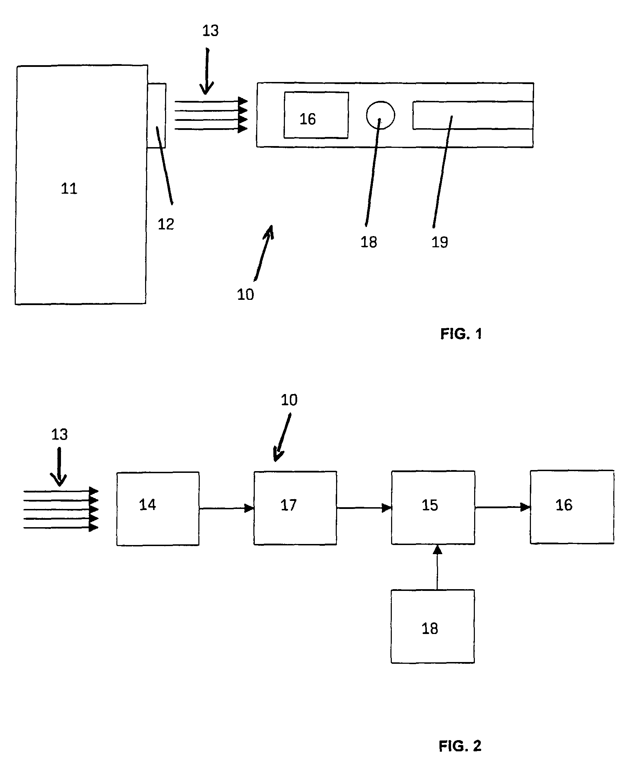

Figur 1 zeigt einen Lesestift 10 im Sinne der Erfindung in Verbindung mit einer Steuerungseinrichtung 11 für einen Ölbrenner. Der Steuerungseinrichtung 11 ist eine Sendeeinrichtung 12 zugeordnet, mit der Daten ausgesendet werden sollen. Bei den ausgesendeten Daten handelt es sich um Informationen über den Betriebszustand des gesteuerten bzw. geregelten, nicht-dargestellten Ölbrenners und/oder über den Betriebszustand der Steuerungseinrichtung 11. So können die ausgesendeten Daten z.B. Informationen über die Flammenintensität oder Informationen über einen Störungszustand enthalten.

Bei der Sendeeinrichtung 12 der Steuerungseinrichtung 11 handelt es sich vorzugsweise um eine Infrarot-Licht emittierende Diode. Die Daten werden demnach in Form von Infrarot-Licht übertragen, was in den Figuren 1 und 2 mit Hilfe der Pfeile 13 dargestellt ist. Es ist selbstverständlich, daß die Sendeeinrichtung 12 der Steuerungseinrichtung 11 die Daten auch auf andere Art und Weise - also in einer anderen Übertragungsform - aussenden kann, zum Beispiel als sichtbares Licht, UV-Licht, Schall oder Ultraschall.

Zum Empfangen der von der Steuerungseinrichtung 11 ausgesendeten Daten verfügt der erfindungsgemäße Lesestift 10 über eine entsprechende Empfangseinrichtung 14. Bei dem hier gezeigten Ausführungsbeispiel ist die Empfangseinrichtung 14 als IR-Diode ausgebildet. Wird eine andere Übertragungsform für die Daten gewählt, so ist die Empfangseinrichtung 14 des erfindungsgemäßen Lesestifts 10 entsprechend anders ausgebildet. Die Sendeeinrichtung 12 der Steuerungseinrichtung 11 und die Empfangseinrichtung 14 des erfindungsgemäßen Lesestifts 10 können auch zur Datenübertragung über ein Kabel verbunden sein. Die berührungslose bzw. kontaktlose Datenübertragung mit Hilfe von Infrarot-Licht ist jedoch bevorzugt.

Zum Auswerten und Anzeigen der erfaßten Daten verfügt der erfindungsgemäße Lesestift 10 über eine im Lesestift 10 integrierte Auswerteeinrichtung 15 sowie über eine ebenfalls im Lesestift integrierte Anzeigeeinrichtung 16. Bei der Auswerteeinrichtung 15 handelt es sich um einen Mikro-Controller und bei der Anzeigeeinrichtung 16 um ein Flüssigkristall-Display. Die Anzeigeeinrichtung 16 ist hier also als visuelle Anzeigeeinrichtung ausgebildet.

Im Zusammenhang mit der Anzeigeeinrichtung 16 sei jedoch angemerkt, daß auch andere visuelle Anzeigeeinrichtungen möglich sind, so zum Beispiel eine LED-Kette oder dergleichen. Auch kann die Anzeigeeinrichtung 16 als akustische Anzeigeeinrichtung ausgebildet sein, also als Sprachausgabe-Einrichtung oder dergleichen. Die Verwendung eines Flüssigkristall-Displays als visuelle Anzeigeeinrichtung ist bevorzugt.

Die von der Empfangseinrichtung 14 empfangenen Daten werden über eine Signalanpassungseinrichtung 17 der Auswerteeinrichtung 15 zugeführt. In der Auswerteeinrichtung 15 werden die erfaßten Daten - bei Verwendung eines Flüssigkristall-Displays als visuelle Anzeigeeinrichtung 16 - in alphanumerische Zeichen gewandelt. Diese alphanumerischen Zeichen können dann auf der Anzeigeeinrichtung 16 angezeigt werden. Enthalten die von der Steuerungseinrichtung 11 an den Lesestift 10 übermittelten Daten z.B. Informationen über einen Störzustand, so werden die erfaßten Daten von der Auswerteeinrichtung 15 entsprechend des jeweiligen Störzustands in einen entsprechenden Zahlencode gewandelt, der auf der Anzeigeeinrichtung 16 angezeigt wird und einer Bedienperson unmittelbar Informationen über den Störzustand anzeigt. Mit Hilfe des erfindungsgemäßen Lesestifts 10 können demnach ohne Zurückgreifen auf externe Auswerteeinrichtungen einer Bedienperson unmittelbar Informationen über den Betriebszustand der Steuerungseinrichtung 11 bzw. des mit der Steuerungseinrichtung 11 gesteuerten bzw. geregelten Brenners angezeigt werden. Dies ist von Vorteil, da ohne die Notwendigkeit externer Auswerteeinrichtungen vor Ort am Feuerungsautomaten bzw. Brenner von der Bedienperson entsprechende Maßnahmen zur Behebung eines eventuell angezeigten Störzustands eingeleitet werden können.

Der erfindungsgemäße Lesestift 10 verfügt des weiteren über eine im Lesestift 10 integrierte Betätigungseinrichtung 18 zum Einschalten des Lesestifts 10. Bei eingeschaltetem Lesestift 10 kann mit Hilfe der Betätigungseinrichtung 18 auch die Auswerteeinrichtung 15 und/oder die Anzeigeeinrichtung 16 zurückgesetzt werden. Bei der Betätigungseinrichtung 18 handelt es sich um eine mechanische Taste.

Sind vom erfindungsgemäßen Lesestift 10 innerhalb einer vorgegebenen Zeitdauer keine Daten erfaßt worden, so ist der Lesestift 10 mit Hilfe der Auswerteeinrichtung 15 in einen Standby-Betriebsmodus überführbar. In diesem Standby-Betriebsmodus ist die Empfangseinrichtung 14 ausgeschaltet, die Anzeige 16, die Auswerteeinrichtung 15 und ein nicht-dargestellter Speicher sind weiterhin aktiv. Vorzugsweise wird der Lesestift 10 nach zehn Sekunden in den Standby-Betriebsmodus überführt.

Darüber hinaus ist der Lesestift 10 nach einer vorgegebenen zweiten, längeren Zeitdauer von der Auswerteeinrichtung 15 insgesamt ausschaltbar, d.h. alle Funktionen sind deaktiviert. Vorzugsweise wird der Lesestift 10 von der Auswerteeinrichtung 15 nach ca. 10 Minuten abgeschaltet, die sich an die obige erste Zeitpanne von vorzugsweise 10 Sekunden anschließt.

Beim Lesestift 10 handelt es sich um eine kleine, kompakte Einheit. Mit Hilfe einer Befestigungseinrichtung 19, insbesondere mit Hilfe eines Ansteckclips, kann der Lesestift 10 z.B. in einer Hemdtasche eines Bedieners aufbewahrt und transportiert werden. Der gesamte Lesestift 10 ist demnach von kompakter Baugröße und infolge der integrierten Auswerteeinrichtung sowie Anzeigeeinrichtung universell einsetzbar.

Zur Spannungsversorgung dienen handelsübliche Batterien, die im Lesestift 10 Aufnahme finden. Auf dem Lesestift 10 ist z.B. ein Aufkleber oder dergleichen anbringbar, der Interpretationshilfen der angezeigten alphanumerischen Zeichen für den Benutzer enthält.

Der Vollständigkeit halber sei angemerkt, daß der Lesestift 10 auch eine Sendeeinrichtung aufweisen kann, um erfaßte Daten an eine externe Einrichtung zu übertragen.

### Bezugszeichenliste:

- 10: Lesestift
- 11: Steuerungseinrichtung
- 12: Sendeeinrichtung
- 13: Pfeil
- 14: Empfangseinrichtung
- 15: Auswerteeinrichtung
- 16: Anzeigeeinrichtung
- 17: Signalanpassungseinrichtung
- 18: Betätigungseinrichtung
- 19: Befestigungseinrichtung

## Patentansprüche

1. Lesestift zum Erfassen, Auswerten und Anzeigen von Daten einer Ölbrenner- oder Gasbrenner-Steuerungseinrichtung (11), mit einer Sende- und/oder Empfangseinrichtung zum Übertragen und/oder Erfassen von Daten, mit folgenden Merkmalen:
a) im Lesestift (10) ist eine Auswerteeinrichtung (15) zum Auswerten der erfaßten Daten integriert;
b) im Lesestift (10) ist auch eine Anzeigeeinrichtung (16) zum Anzeigen der erfaßten und ausgewerteten Daten integriert;
c) der Lesestift (10) ist nach einer vorgegebenen ersten Zeitdauer, in der keine Daten erfaßt worden sind, von der Auswerteeinrichtung (15) in einen Standby-Betriebsmodus überführbar;
d) der Lesestift (10) ist nach einer vorgegebenen zweiten Zeitdauer, die sich der ersten Zeitdauer anschließt, von der Auswerteeinrichtung (15) insgesamt ausschaltbar.

2. Lesestift nach Anspruch 1, **dadurch gekennzeichnet, daß** im Standby-Betriebsmodus die Empfangseinrichtung ausgeschaltet ist, während die Auswerteeinrichtung (15) und die Anzeigeeinrichtung (16) eingeschaltet sind.

3. Lesestift nach Anspruch 1 oder 2, **gekennzeichnet durch** eine im Lesestift integrierte Betätigungseinrichtung (18) zum Einschalten des Lesestifts und zum Rücksetzen der Auswerteeinrichtung (15) und Anzeigeeinrichtung (16).

4. Lesestift nach einem oder mehreren der Ansprüche 1 bis 3, **dadurch gekennzeichnet, daß** die Auswerteeinrichtung (15) die erfaßten Daten in anzeigbare Daten wandelt und diese auf der Anzeigeeinrichtung (16) anzeigt.

5. Lesestift nach Anspruch 4, **dadurch gekennzeichnet daß** die Auswerteeinrichtung (15) die erfaßten Daten in alfa-numerische Zeichen wandelt.

6. Lesestift nach einem oder mehreren der Ansprüche 1 bis 5, **dadurch gekennzeichnet, daß** die Auswerteeinrichtung (15) als Mikro-Controller ausgebildet ist.

7. Lesestift nach einem oder mehreren der Ansprüche 1 bis 6, **dadurch gekennzeichnet, daß** die Anzeigeeinrichtung (16) als visuelle Anzeigeeinrichtung ausgebildet ist.

8. Lesestift nach Anspruch 7, **dadurch gekennzeichnet, daß** die Anzeigeeinrichtung (16) als Flüssigkristall-Display ausgebildet ist.

9. Verwendung eines Lesestifts (10) mit einer Sende- und/oder Empfangseinrichtung, mit einer im Lesestift (10) integrierten Auswerteeinrichtung (15) und mit einer ebenfalls im Lesestift (10) integrierten Anzeigeeinrichtung (16), zum Erfassen, Auswerten und Anzeigen von Daten einer Ölbrenner- oder Gasbrenner-Steuereinrichtung (11).
